# EUROPÄISCHE PATENTANMELDUNG

(11) **EP 1 464 941 A1**
(43) Veröffentlichungstag der Anmeldung: **06.10.2004**
(21) Anmeldenummer: 04100973.9
(22) Anmeldetag: 10.03.2004
(51) Int. Cl.: G01L 9/00, G01L 7/08

(54) **Drucksensor**

(30) Priorität: 01.04.2003 DE 10314910
(71) Anmelder: SIEMENS AKTIENGESELLSCHAFT, 80333 München (DE)
(72) Erfinder: Mattmann, Erich, 55262 Heidesheim (DE)

(57) **Zusammenfassung**

Die Erfindung bezieht sich auf einen Drucksensor mit einer Membran 4, die an ihrem radial umlaufenden Randbereich 9 fest angeordnet und auf einer Seite von einem Messmedium beaufschlagbar und auslenkbar ist. Auf der Membran 4 sind Messelemente und eine die Messelemente miteinander verbindende elektrische Schaltung angeordnet, wobei Messelemente und Schaltung in Dickschichttechnik aufgebracht und in einem Temperaturprozess aufgesintert sind. Die Membran besteht aus einem elektrisch leitenden Metall und trägt eine Isolierschicht 5, auf der die Messelemente sowie die elektrische Schaltung angeordnet sind. Dabei besteht die Isolierschicht 5 aus einem Material, dessen Ausdehnungskoeffizient zwischen dem Ausdehnungskoeffizient des Metalls der Membran und dem Ausdehnungskoeffizient des Materials der Messelemente und der elektrischen Schaltung liegt.

## Beschreibung

Die Erfindung bezieht sich auf einen Drucksensor mit einer Membran, die an ihrem radial umlaufenden Randbereich fest angeordnet und auf einer Seite von einem Messmedium beaufschlagbar und auslenkbar ist, mit auf der Membran angeordneten Messelementen und einer die Messelemente miteinander verbinden elektrischen Schaltung, wobei Messelemente und Schaltung in Dickschichttechnik aufgebracht und in einem Temperaturprozess aufgesintert sind.

Derartige bekannte Drucksensoren besitzen eine Membran aus Keramik, auf die eine Dickschichtschaltung in Form einer Wheatstonschen Messbrücke aufgedruckt und aufgesintert ist sowie an die Messbrücke die Messelemente bildende Widerstände angeschlossen sind. Die Rohlinge der Membran werden aus einem Keramikguss herstellt und sind sehr teuer. Die weitere Fertigung der Drucksensoren mit den Membranrohlingen ist ebenfalls kostenintensiv, da sie weitgehend nur als Einzelteilfertigung möglich ist.

Die Membranen bilden Einlegeteile zum Einlegen in die Sensorgehäuse und anschließender mechanischer Verschraubung in dem Sensorgehäuse. Damit ist eine dichte Anordnung der Membranen in den Sensorgehäusen nur schwer möglich.

Aufgabe der Erfindung ist es daher einen Drucksensor der eingangs genannten Art zu schaffen, der auf einfache Weise und kostengünstig herstellbar ist und mit einfachen Mitteln eine dichte Anordnung der Membran im Sensorgehäuse ermöglicht.

Diese Aufgabe wird erfindungsgemäß dadurch gelöst, dass die Membran aus einem elektrisch leitenden Metall besteht und eine Isolierschicht trägt, auf der die Messelemente sowie die elektrische Schaltung angeordnet sind, wobei die Isolierschicht aus einem Material besteht, dessen Ausdehnungskoeffizient zwischen dem Ausdehnungskoeffizient des Metalls der Membran und dem Ausdehnungskoeffizient des Materials der Messelemente und der elektrischer Schaltung liegt.

Die Ausbildung der Membran aus einem Metall ermöglicht den Einsatz des Drucksensors bei einer Vielzahl von flüssigen und gasförmigen Medien, deren Druck gemessen werden soll. Eine Herstellung und Verarbeitung derartiger Membranen ist insbesondere großserienmäßig und fügetechnisch auf kostengünstige Art und einfach möglich.

Weiterhin sind derartige Drucksensoren auch für höhere zu messende Drücke in einer Größenordnung von z.B. 2000 bar gut geeignet.

Die Isolierschicht verhindert einen Kurzschluss zwischen den auf der elektrisch leitfähigen Membran angeordneten Teilen.

Durch die Verwendung einer Isolierschicht aus einem Material, dessen Ausdehnungskoeffizient zwischen dem des Metalls der Membran und dem Material der Messelemente und der elektrischen Schaltung liegt, wird darüber hinaus ein Abplatzen der Messelemente und Leiterbahnen bei schwankenden Temperaturbelastungen des Drucksensors vermieden, so dass der Druckssensor auch gut zur Druckmessung von warmen oder heißen Medien eingesetzt werden kann.

Vorzugsweise bildet die die Messelemente miteinander verbindende elektrische Schaltung eine Wheatstonsche Messbrücke, wobei die Messelemente Dehnungsmessstreifen sein können.

Sind auf der Membran mehrere übereinanderliegende Isolierschichten angeordnet und trägt die der Membran entferntest liegende Isolierschicht die Messelemente und die Schaltung, wobei die Ausdehnungskoeffizienten des Materials der Isolierschichten zwischen dem Ausdehnungskoeffizient des Metalls der Membran und dem Ausdehnungskoeffizient des Materials der Messelemente und der elektrischer Schaltung liegen, so wird selbst bei großen unterschiedlichen Ausdehnungskoeffizienten der Materialen von Membran und Messelementen sowie elektrische Schaltung ein Abplatzen vermieden.

Dabei sind vorzugsweise die Ausdehnungskoeffizienten der Materialien der Isolierschichten stufenweise ansteigend und die Isolierschicht mit einem dem Metall der Membran näheren Ausdehnungskoeffizienten näher der Membran und die Isolierschicht mit den Messelementen und der elektrischen Schaltung näherem Ausdehnungskoeffizienten der Membran entfernter angeordnet.

Es ist aber auch möglich, dass die Ausdehnungskoeffizienten mehrerer Isolierschichten gleich sind.

Besonders geeignet sind Isolierschichten, die Bariumtitanat enthalten.

Eine Unempfindlichkeit selbst gegen aggressive zu messende Medien wie z.B. CO₂ wird erreicht, wenn die Membran eine Edelstahlmembran ist.

Besteht dabei die Edelstahlmembran aus einem Edelstahlblech mit einer Dicke von etwa 0,1 mm bis 0,6 mm, so bleibt auch die Empfindlichkeit des Drucksensors sehr hoch.

Zu einem einfachen Herstellungsprozess führt es, wenn die Isolierschichten aus einer auf die Membran oder eine untere Isolierschicht aufgedruckten Dielektrikumspaste bestehen, die in einem Temperaturprozess eingebrannt ist.

Eine rationelle Herstellung wird erreicht, wenn eine oder mehrere Isolierschichten und/oder die elektrische Schaltung und/oder die Messelemente in einem gemeinsamen Temperaturprozess eingebrannt sind.

Werden auf einem Blech größer Fläche mehrere Schichtensysteme aus Isolierschichten, Messelementen und elektrischer Schaltung aufgebracht und in einem Temperaturprozess eingebrannt, sowie die einzelnen Membranen einzeln z.B. mittels Laser herausgeschnitten oder ausgestanzt, so wird auf einfache Weise eine leichte Herstellbarkeit im Mehrfachnutzen erreicht.

Eine montagefreundliche Baueinheit ergibt sich, wenn auf der die elektrische Schaltung und die Messelemente tragenden Seite der Membran elektrische und/oder elektronische Bauteile einer mit der elektrischen Schaltung verbundenen Auswerteeinheit angeordnet sind, die vorzugsweise elektronische integrierte Schaltungen aufweist.

Dabei kann die Auswerteschaltung als SMD-Bauteile ausgebildete elektronische Bauteile aufweisen.

Selbst bei hohen Drücken des zu messenden Mediums wird eine Dichtheit des Drucksensors erreicht, wenn die Membran an ihrem radial umlaufenden Randbereich mit einem Bauteil des Drucksensors verschweißt ist.

Dabei kann die Membran an ihrem radial umlaufenden Randbereich mit einer Hülse zu einem Drucktopf verschweißt sein, der leicht montierbar in das Gehäuse des Drucksensors eingebaut ist, wenn der Drucktopf an seiner inneren oder äußeren zylindrischen Mantelfläche mit einem Gewinde versehen ist.

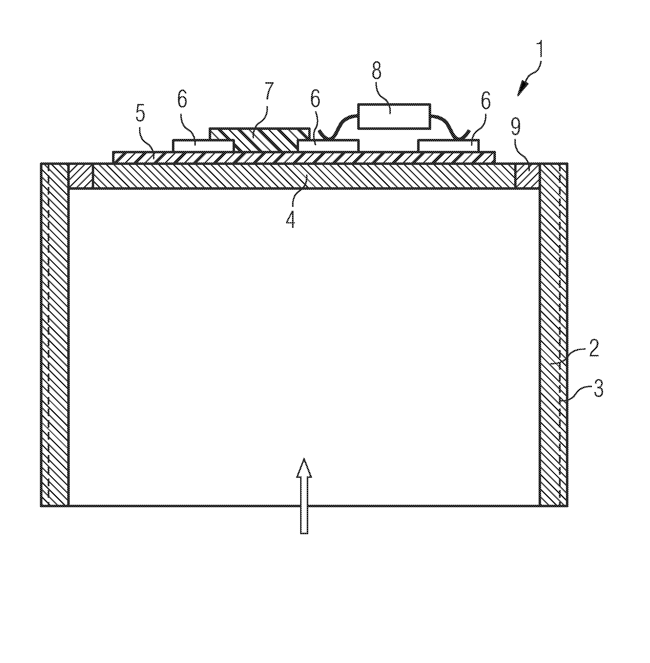

Ein Ausführungsbeispiel der Erfindung ist in der Zeichnung dargestellt. Die einzige Figur der Zeichnung zeigt einen Querschnitt eines Drucktopfes eines Drucksensors.

Der in der Zeichnung dargestellte Drucktopf 1 besteht aus einer zylindrischen Hülse 2 aus Edelstahl, die an ihrer äußeren zylindrischen Mantelfläche mit einem Gewinde 3 versehen ist.

An ihrem einen Ende ist die Hülse 2 von einer Membran 4 aus Edelstahl verschlossen, die mit ihrem radial umlaufenden Randbereich 9 vorzugsweise durch Laserschweißen mit dem radial umlaufenden Endbereich der Hülse 2 verschweißt ist und eine Dicke von z.B. 0,2 mm besitzt.

Durch eine Laserschweißung bleibt die Membran 4 weitestgehend spannungsfrei, so dass keine Verfälschungen der Messwerte des Drucksensors aufgrund von Wärmespannungen entstehen können. Außerdem ist durch Laserschweißen auch eine Membran geringerer Dicke gut schweißbar.

Auf der äußeren Fläche der Membran 4 ist eine Isolierschicht 5 angeordnet. Es können aber auch mehrere Isolierschichten übereinander liegend angeordnet sein.

Auf der Isolierschicht 5, die elektrisch isolierend ist, sind Leiterbahnen 6 einer elektrischen Schaltung, als Dehnungsmessstreifen ausgebildete Messwiderstände 7 und elektronische Bauteile 8 einer Auswerteschaltung angeordnet.

Die Leiterbahnen 6 der elektrischen Schaltung verbinden die Messwiderstände 7 zu einer Wheatstonschen Brücke, deren Ausgangssignal der Auswerteschaltung zuführbar ist.

Die Isolierschicht 5 ist als Dielektrikumspaste auf die Membran 4 aufgedruckt. Danach erfolgt ebenfalls als Pastendruck das Aufbringen der Leiterbahnen 6 und Messwiderstände 7. In einem gemeinsamen Temperaturprozess erfolgt dann ein Aufsintern der Isolierschicht 5 der Leiterbahnen 6 und Messwiderstände 7. Anschließend werden die elektronischen Bauteile 8 der Auswerteschaltung aufgelötet.

Der Ausdehnungskoeffizient des Materials der Isolierschicht 5 liegt zwischen dem des Edelstahls der Membran 4 und dem der Materialen der Messwiderstände 7 und der Leiterbahnen 6.

Nach Einschrauben des Drucktopfes 1 mit seinem Gewinde in eine entsprechende Ausnehmung eines nicht dargestellten Sensorgehäuses und Schließen des der Membran 4 gegenüberliegenden Endes der Hülse 2 bildet das Innere des Drucktopfes 1 eine mit dem Medium, dessen Druck gemessen werden soll, beaufschlagbare Kammer.

## Patentansprüche

1. Drucksensor mit einer Membran, die an ihrem radial umlaufenden Randbereich fest angeordnet und auf einer Seite von einem Messmedium beaufschlagbar und auslenkbar ist, mit auf der Membran angeordneten Messelementen und einer die Messelemente miteinander verbinden elektrischen Schaltung, wobei Messelemente und Schaltung in Dickschichttechnik aufgebracht und in einem Temperaturprozess aufgesintert sind, **dadurch gekennzeichnet, dass** die Membran (4) aus einem elektrisch leitenden Metall besteht und eine Isolierschicht (5) trägt, auf der die Messelemente sowie die elektrische Schaltung angeordnet sind, wobei die Isolierschicht (5) aus einem Material besteht, dessen Ausdehnungskoeffizient zwischen dem Ausdehnungskoeffizient des Metalls der Membran (4) und dem Ausdehnungskoeffizient des Materials der Messelemente und der elektrischer Schaltung liegt.

2. Drucksensor nach Anspruch 1, **dadurch gekennzeichnet, dass** die die Messelemente miteinander verbindende elektrische Schaltung eine Wheatstonsche Messbrücke bildet.

3. Drucksensor nach Anspruch 2, **dadurch gekennzeichnet, dass** die Messelemente Dehnungsmessstreifen sind.

4. Drucksensor nach einem der vorhergehenden Ansprüche, **dadurch gekennzeichnet, dass** auf der Membran (4) mehrere übereinanderliegende Isolierschichten (5) angeordnet sind und die der Membran (4) entferntest liegende Isolierschicht die Messelemente und die Schaltung trägt, wobei die Ausdehnungskoeffizienten der Materialien der Isolierschichten (5) zwischen dem Ausdehnungskoeffizient des Metalls der Membran (4) und dem Ausdehnungskoeffizient des Materials der Messelemente und der elektrischer Schaltung liegen.

5. Drucksensor nach Anspruch 4, **dadurch gekennzeichnet, dass** die Ausdehnungskoeffizienten der Materialien der Isolierschichten stufenweise ansteigend sind und die Isolierschicht mit einem dem Metall der Membran näheren Ausdehnungskoeffizienten näher der Membran und die Isolierschicht mit den Messelementen und der elektrischen Schaltung näherem Ausdehnungskoeffizienten der Membran entfernter angeordnet sind.

6. Drucksensor nach Anspruch 4, **dadurch gekennzeichnet, dass** die Ausdehnungskoeffizienten mehrerer Isolierschichten gleich sind.

7. Drucksensor nach einem der vorhergehenden Ansprüche, **dadurch gekennzeichnet, dass** die Membran (4) eine Edelstahlmembran ist.

8. Drucksensor nach Anspruch 7, **dadurch gekennzeichnet, dass** die Edelstahlmembran (4) aus einem Edelstahlblech mit einer Dicke von etwa 0,1 mm bis 0,6 mm besteht.

9. Drucksensor nach einem der vorhergehenden Ansprüche, **dadurch gekennzeichnet, dass** die Isolierschichten (5) aus einer auf die Membran (4) oder eine untere Isolierschicht (5) aufgedruckten Dielektrikumspaste bestehen, die in einem Temperaturprozess eingebrannt ist.

10. Drucksensor nach einem der vorhergehenden Ansprüche, **dadurch gekennzeichnet, dass** eine oder mehrere Isolierschichten (5) und/oder die elektrische Schaltung und/oder die Messelemente in einem gemeinsamen Temperaturprozess eingebrannt sind.

11. Drucksensor nach einem der vorhergehenden Ansprüche, **dadurch gekennzeichnet, dass** auf der die elektrische Schaltung und die Messelemente tragenden Seite der Membran (4) elektrische und/oder elektronische Bauteile (8) einer mit der elektrischen Schaltung verbundenen Auswerteschaltung angeordnet sind.

12. Drucksensor nach Anspruch 11, **dadurch gekennzeichnet, dass** die Auswerteschaltung elektronische integrierte Schaltungen aufweist.

13. Drucksensor nach einem der Ansprüche 11 und 12, **dadurch gekennzeichnet, dass** die Auswerteschaltung als SMD-Bauteile ausgebildete elektronische Bauteile aufweist.

14. Drucksensor nach einem der vorhergehenden Ansprüche, **dadurch gekennzeichnet, dass** die Membran (4) an ihrem radial umlaufenden Randbereich (9) mit einem Bauteil des Drucksensors verschweißt ist.

15. Drucksensor nach Anspruch 14, **dadurch gekennzeichnet, dass** die Membran (4) an ihrem radial umlaufenden Randbereich (9) mit einer Hülse (2) zu einem Drucktopf (1) verschweißt ist.

16. Drucksensor nach Anspruch 15, **dadurch gekennzeichnet, dass** der Drucktopf (1) an seiner inneren oder äußeren zylindrischen Mantelfläche mit einem Gewinde (3) versehen ist.
